(19) **Europäisches Patentamt**

**European Patent Office**

**Office européen des brevets**

(11) **EP 1 147 054 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.⁷: **B65D 47/08**, B65D 55/16, B65D 50/04

(21) Anmeldenummer: **99950420.2**

(22) Anmeldetag: **30.10.1999**

(86) Internationale Anmeldenummer:
**PCT/CH99/00510**

(87) Internationale Veröffentlichungsnummer:
**WO 00/044638 (03.08.2000 Gazette 2000/31)**

(54) **GESCHLOSSEN GESPRITZTER VERSCHLUSS**

CLOSURE EXTRUDED IN CLOSED STATE

BOUCHON MOULE PAR INJECTION A L'ETAT FERME

(84) Benannte Vertragsstaaten:
**AT BE CH CY DE DK ES FI FR GB GR IE IT LI LU MC NL PT SE**

(30) Priorität: **27.01.1999 WOPCT/IB99/00277**

(43) Veröffentlichungstag der Anmeldung:
**24.10.2001 Patentblatt 2001/43**

(73) Patentinhaber: **Creanova AG**
**CH-6340 Baar (CH)**

(72) Erfinder:
• **LAGLER, Louis**
**CH-8037 Zürich (CH)**

• **RENTSCH, Rudolf**
**CH-8706 Meilen (CH)**

(74) Vertreter: **Rentsch, Rudolf A.**
**IP&T Rentsch & Partner**
**Fraumünsterstrasse 9**
**8001 Zürich (CH)**

(56) Entgegenhaltungen:
**DE-U- 8 800 462       FR-A- 2 715 381**
**US-A- 5 148 912**

**Beschreibung**

Die vorliegende Erfindung betrifft einen geschlossen gespritzten Verschluss gemäss dem Oberbegriff des unabhängigen Patentanspruchs 1.

Aus dem Stand der Technik sind verschiedene Kunststoffverschlüsse mit Schnappscharnieren bekannt. Damit sie funktionieren, werden diese aus technischen Gründen in der Regel in offener Position hergestellt Aus Kostengründen wurde jedoch versucht, solche Verschlüsse im geschlossenen Zustand zu spritzen, v.a. um den Werkzeugaufwand und die Produktionskosten zu reduzieren, u.a. unter Vermeidung des sog. Verdeckelungsprozesses. Geschlossen gespritzte Verschlüsse sind entsprechend vorteilhaft, da sie billiger sind, ein einfacheres Werkzeug ermöglichen und zudem die Gelegenheit bieten ohne wesentlichen Mehraufwand ein Originalitätssiegel zu integrieren. Beispiele für geeignete Originalitätssiegel sind Abreisslippen oder Schwachstellen in Form von dünnen Verbindungsstegen. Diese Abreisslippen oder Dünnstellen müssen beim ersten Öffnen entfernt oder bewusst zerstört werden. Besonders bei Nahrungsmitteln, Medikamenten oder bei Produkten für Kleinkinder stellt der Gesetzgeber zunehmend Anforderungen an die Produktesicherheit, was das Interesse an entsprechenden Verschlüssen mit Originalitätssiegeln zusätzlich steigert.

Aus dem Stand der Technik sind einzelne einteilig geschlossen gespritzte Verschlüsse bekannt, welche aber keine überzeugende Funktionsweise besitzen. Hauptsächlich aufgrund eines zu geringen Öffnungswinkels, eines schlechten Schnappeffekts und ungenügendem Design sowie ungenügender Dichtung vermögen sich diese Verschlüsse auf dem Markt nicht durchzusetzen. In der geöffneten Position befindet sich der bewegliche Verschlussteil in einer derart ungünstigen Lage, dass er ständig und unvermeidbar mit Füllgut in Kontakt tritt und dadurch verschmutzt. Zudem befindet sich dieser Verschlussteil derart nahe bei der Ausgussöffnung, dass er diese optisch versperrt. Auch in spritzgiesstechnischer Hinsicht sind diese Verschlüsse zudem nicht unproblematisch. Asymmetrische Fliesswege, ungünstige Anordnung der Filmscharniere und Kühlprobleme sind nureinige der Probleme. Systembedingt sind diese Nachteile nicht behebbar. Hinderlich und besonders nachteilhaft sind insbesondere die Hauptscharnierverbindungen zwischen den Verschlussteilen, welche den Verschlussteilen eine Rotationsbewegung aufzwingen und die Verschlusskinematik beschränken.

Beispielsweise zeigt EP 0 532 471 einen Verschluss, dem die oben beschriebenen Nachteile anhaften. Der Verschlussunterteil ist mit dem beweglichen Verschlussoberteil über eine Hauptscharnierverbindung und zwei seitlich angeordnete Spannbänder verbunden. Die Scharnierverbindungen und die Spannbänder müssen so angeordnet sein, dass sie einerseits entformbar und von beiden Seiten (aussen und innen) her zugänglich sind. Die unumgängliche Hauptscharnierverbindung bewirkt, dass die Verschlussteile sehr nahe beisammen angeordnetwerden müssen, unter entsprechend negativer Auswirkung auf den geöffneten Zustand. Die für die Herstellung erforderliche Zugänglichkeit des Scharnierbereichs bewirkt zudem, dass die Spannbänder nicht beliebig gestaltet werden können und der Winkel zwischen Offen- und Schliessstellung im Bereich von 80° und weniger bleibt. Ausserdem befindet sich der Verschlussoberteil in der geöffneten Position in einer schlechten, instabilen und willkürlichen Anordnung gegenüber dem Ausguss. Ein zu geringer Schnappeffekt und die absolutungünstige Position des Verschlussoberteils gegenüber dem Verschlussunterteil in geöffneter Position verhindern ein sinnvolle Funktion. Probleme mit den Fliesswegen und schlechtes Design sind weitere Schwachpunkte. Die Hauptscharnierverbindung bewirkt zudem, dass sich die Verschlussteile auf Kreisbahnen bewegen und daher hinsichtlich der räumlichen Anordnung starken Einschränkungen unterlegen sind.

Die oben beschriebenen Nachteile sind mit den herkömmlichen Verschlüssen, die aus dem Stand der Technik bekannt sind, nicht zu beheben.

Es ist daher Aufgabe der vorliegenden Erfindung einen geschlossen gespritzten Verschluss zu schaffen, dem die aus dem Stand der Technik bekannten Nachteile nicht anhaften und der einen grossen, einstellbaren Öffnungswinkel und einen deutlichen Schnappeffekt aufweist. Es ist zudem Aufgabe der vorliegenden Erfindung einen Verschluss zu schaffen, bei dem der bewegliche Verschlussteil in offener Position aus dem Mündungsbereich des Ausgusses entfernt angeordnet sein kann. Ausserdem soll der Verschluss, falls gewünscht, die Möglichkeit einer Kinder- und Transportsicherung bieten und gute Dichtung auch bei Füllgut mit Gasdruck bieten.

Diese Aufgabe wird durch die in den Patentansprüchen definierte Erfindung gelöst.

Die hier offenbarte Erfindung vermeidetvorab die Engpässe, denen Konstruktionen gemäss dem Stand der Technik unterliegt, indem eine Hauptscharnierverbindung zwischen den Verschlussteilen gezieltvermieden wird. Der bewegliche Verschlussteil wird ausserhalb der Zone des Ausgusses bzw. Öffnung platziert. Dadurch wird einem Verschmutzen des beweglichen Verschlussteils durch Füllgut und einem optischen und funktionalen Versperren vorgebeugt. Der Schnappeffektwird gezielt und den Anforderungen gerechteingestellt un d vorbestimmt. Aufgrund des nicht vorhandenen Hauptscharniers wird es zudem erstmals möglich, deutlich symmetrische Fliesswege bei geschlossen gespritzten Verschlüssen im Scharnierbereich zu realisieren. Dies führt dazu, dass Probleme wie Materialrückflüsse und Kaltschweissstellen nicht auftreten.

Durch die hauptscharnierlose Verbindung wird zudem erreicht, dass sich die Verschlussteile relativ zueinander nicht mehr auf Kreisbahnen bewegen. Die räumlichen Bahnkurven entsprechen vielmehr einstellbaren Bewegungsbahnen, die den jeweiligen Anforderungen angepasst werden. HoheAusgüsse und andere Hindernisse werden gezielt überwunden. Die Erfindung sieht es vor, dass geschlossen gespritzte Verschlüsse unter Vermeidung der bekannten Nachteile mit oder ohne Originalitätssiegel und mit gutem Design herstellbar sind. Sofern dies im konkreten Fall gewünscht ist, können Kinder- und Transportsicherung sowie eine besondere Dichtung bei Füllgut mit Gasdruck vorgesehen werden.

Ausführungsbeispiele der Erfindung werden anhand der folgenden Figuren näher erläutert:

Figur 1     zeigt schematisch einen Verschluss gemäss dem Stand der Technik;

Figur 2     zeigt schematisch einen Verschluss gemäss der hier offenbarten Erfindung;

Figur 3     zeigt eine bevorzugte Ausführungsform eines erfindungsgemässen Verschlusses;

Figur 4     zeigt den Verschluss gemäss Figur 3 in Offenstellung;

Figur 5     zeigt einen geschlossen gespritzten Verschluss mit oben angeordneter Scharnierverbindung.

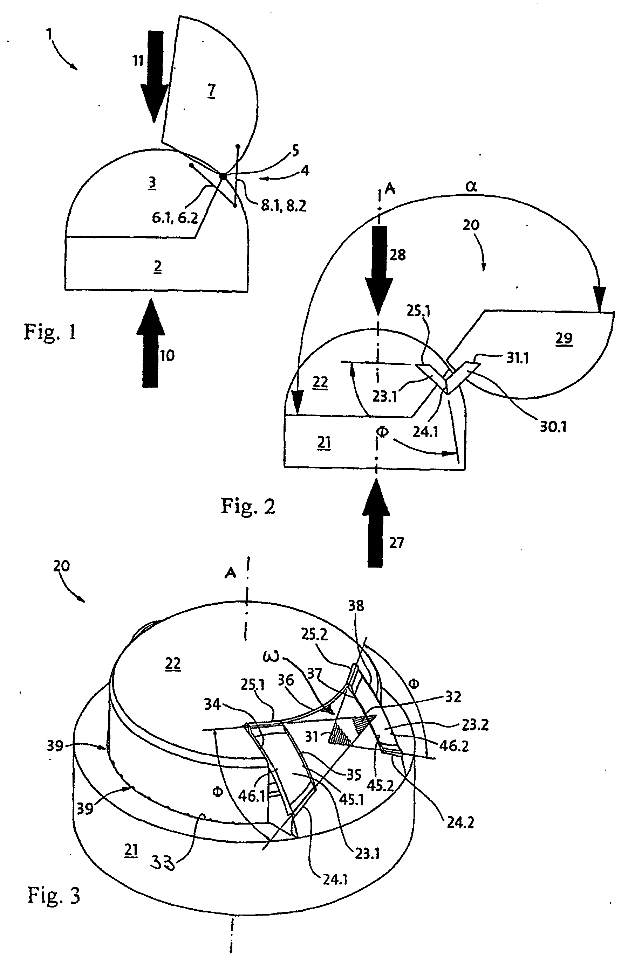

**Figur 1** zeigt in einer Seitenansicht schematisch einen geschlossen gespritzten Verschluss 1, wie er aus dem Stand der Technik bekannt ist. Zu erkennen sind ein Verschlussunterteil 2 und ein beweglicher Verschlussoberteil 3. Das Verschlussunterteil 3 ist mit dem Verschlussunterteil 2 über ein konventionelles Schnappscharnier 4 verbunden ist. Das Schnappscharnier4 besteht aus einer Hauptscharnierverbindung 5 und zwei Spannbändern 6.1 und 6.2 (aufgrund der Blickrichtung ist hier nur das Spannband 6.1 sichtbar), die je den Verschlussunterteil 2 mit dem Verschlussoberteil 3 verbinden und in der Regel seitlich neben der Hauptscharnierverbindung 5 angeordnet sind. Anstelle von Spannbändern 6.1, 6.2 sind auch andere Elemente wie Kniehebel, usw. bekannt, die bei geschlossen gespritzten Verschlüssen in der Praxis wegen verschiedener Nachteile keine Anwendung finden. Die Hauptscharnierverbindung 5 bildet eine direkte Scharnierverbindung mit nur einer Scharnierachse zwischen dem Verschlussunterteil 2 und dem Verschlussoberteil 3. Diese Scharnierachse der Hauptscharnierverbindung 5 liegt in der hier gezeigten Darstellung parallel zur Blickrichtung. Aufgrund der Hauptscharnierverbindung 5 mit einer Scharnierachse rotieren alle Teile relativ zueinander auf Kreisbahnen. Um den Verschluss 1 bei geschlossener Stellung des Verschlussoberteils 3 herstellen zu können, müssen die Hauptscharnierverbindung 5 und die Spannbänder 6.1, 6.2 und insbesondere deren Anbindungen an die Verschlussteile 2 und 3 so angeordnet werden, dass sie in der Spritzgussform (nicht näher dargestellt) vom Verschlussinneren (Pfeil 10) und vom Verschlussäusseren (Pfeil 11) her zugänglich sind. Besonders das Hauptscharnier lässt sich dabei nur schlecht ausbilden. Aufgrund dieser Tatsachen sind die Funktion (Schnappeffekt) und die Anordnung (Offenstellung) des Verschlussoberteils bei den aus dem Stand der Technik bekannten Verschlüssen stark eingeschränkt und ungenügend. Eine typische Offenstellung des Verschlussoberteils 3 wird durch ein Verschlussoberteil 7 dargestellt. Die Offenstellung der Spannbänder 6 ist durch Spannbänder 8.1, 8.2 (nur eines zu sehen) dargestellt. Aufgrund der bei diesem Verschlusskonzept unvermeidbaren Hauptscharnierverbindung 5, weist der hier gezeigte Verschluss 1 einen geringen Öffnungswinkel von ungefähr 80° und einen schlechten Schnappeffekt auf.

**Figur 2** zeigt schematisch einen geschlossen gespritzten Verschluss 20 gemäss der hier offenbarten Erfindung. Der Verschluss 20 besteht aus einem Verschlussunterteil 21 und einem Verschlussoberteil 22, das hier in der Schliessstellung, in der es auch hergestellt wird, dargestellt ist. Erfindungsgemäss weist der hier gezeigte Verschluss 20 (im Unterschied zum Stand der Technik) keine Hauptscharnierverbindung (vgl. Figur 1) zwischen den Verschlussteilen 21 und 22 auf. Die Verschlussteile 21 und 22 sind vielmehr durch zwei, vorzugsweise symmetrisch ausgebildete, Elemente 23.1 und 23.2 (aufgrund der Blickrichtung ist nur ein Element 23.1 sichtbar) und vier Scharnierverbindungen 24.1, 24.2, 25.1 und 25.2 miteinander wirkverbunden. Je zwei Scharnierverbindungen 24.1, 25.1, resp. 24.2, 25.2 beranden ein Element 23.1, resp. 23.2 an nicht aneinander grenzenden Seiten und verbinden dieses mit den Verschlussteilen 21, resp. 22. Die Scharnierverbindungen 24.1 und 25.1, respektive 24.2 und 25.2 schliessen je einen zweiten Winkel $\phi$ (vgl. auch Figur 3) zueinander ein. Die beiden durch die Scharnierverbindüngen 24.1 und 25.1, resp. 24.2 und 25.2 aufgespannten Ebenen (nicht näher dargestellt) schliessen ihrerseits einen ersten Winkel $\omega$ ein. Durch Variation der Winkel $\omega$ und $\Phi$ und deren Verhältnis zueinander, wird der Schnappeffekt und ein Öffnungswinkel $\alpha$ des Verschlusses bestimmt. Der Zusammenhang zwischen dem Öffnungswinkel $\alpha$ und den Winkeln $\omega$ und $\Phi$ ist durch folgende Formel gegeben:

$$\Phi = 2 \cdot \arctan\left[\frac{\sin(\alpha/2)}{1 - \cos(\alpha/2)} \cdot \sin(\omega/2)\right]$$

Um den Verschluss 20 in geschlossener Stellung herstellen zu können, werden die Elemente 23.1 und 23.2 und die Scharnierverbindungen 24.1, 24.2, 25.1 und 25.2 so angeordnet, dass sie vom Verschlussinneren (Pfeil 27) und vom Verschlussäusseren (Pfeil 28) her werkzeugtechnisch zugänglich und entformbar sind. Dazu werden die Verbindungselemente 23.1, 23.2 sowie die zugehörigen Scharnierverbindungen in einer Fläche angeordnet, die zur Verschlussachse A geneigt ist Vorzugsweise werden für den Verschluss Scharniere gemäss den Patenten EP 0 746 512, PCT/EP 96/2780 bzw. der Patentanmeldung PCT/IB99/00277 derselben Anmelderin verwendet, auf deren Inhalt für Einzelheiten zur Ausgestaltung der Scharniere Integrierend verwiesen wird. Besonders bei Verschlüssen mit gewölbten Konturen, bei denen die Verbindungselemente 23.1, 23.3 durch ihre Konturintegration eine entsprechende Wölbung oder Krümmung aufweisen, ist ein Scharnier gemäss PCT/EP 96/2780 vorteilhaft, da die elastische Dehnung der zugbelasteten langen Kante 46 (vgl. Figur 3) die gewünschte Schnappwirkung bewirkt.

Eine typische Offenstellung des Verschlussoberteils 22 ist durch ein Verschlussoberteil 29 dargestellt. Die entsprechende Offenstellung des Elementes 23.1, resp. 23.2 und der Scharnierverbindung 25.1, resp. 25.2 sind durch ein Element 30.1, resp. 30.2 und eine Scharnierverbindung 31.1, resp. 31.2 dargestellt Durch das Vermeiden einer Hauptscharnierverbindung zwischen den Verschlussteilen 21 und 22 ist es möglich den Verschlussoberteil 22 in seiner Offenstellung (Verschlussoberteil 29) so anzuordnen, dass ein optimaler und bei Bedarf vorbestimmbarer Öffnungswinkel $\alpha$ und ein einstellbarer Schnappeffekt resultieren. Der vorbestimmte Öffnungswinkel $\alpha$ liegt vorzugswelse im Bereich von 150° bis 180°, kann aber auch anderen Wünschen angepasst werden. Beim Vergleich der in Figur 1 (Stand der Technik) und Figur 2 (Erfindung)dargestellten Verschlüsse, wird dem Fachmann die überragende Bedeutung der hier offenbarten Erfindung für geschlossen hergestellte Verschlüsse klar.

**Figur 3** zeigt eine Ausführungsform eines erfindungsgemässen Verschlusses 20 in einer perspektivischen Darstellung. Der Verschluss ist geschlossen dargestellt (Schliessstellung). Zu erkennen sind ein Verschlussunterteil 21 und ein Verschlussoberteil 22. Diese sind über zwei Elemente 23.1 und 23.2 und vier diese berandende Scharnierverbindungen 24.1, 24.2, resp, 25.1, 25.2 miteinander verbunden. Die Scharnierverbindungen 24,1 und 25.1, resp. 24.2 und 25.2 spannen je zusammen eine Ebene 31, resp. 32 und schliessen untereinander einen Winkel $\Phi$ ein. Die näher bei der Spitze der Winkel $\phi$ liegende Kanten 45 sind vorzugsweise im wesentlichen druckstelf ausgebildet. Die Ebenen 31 und 32 wiederum schliessen räumlich untereinander einen Winkel $\omega$ ein. Die Ebenen 31 und 32 sind gegenüber der Verschlussachse A so geneigt, dass sie im Bereich der unteren Anbindung (Verschlussunterteil 21) von der Verschlussachse weiter entfernt sind als im Bereich der oberen Anbindung (Verschlussoberteil 22). Dadurch ist eine Entformbarkeit des Verschlusses bei gleichzeitiger Möglichkeit der Ausbildung des gewünschten Scharniers möglich. Im gezeigten Ausführungsbeispiel sind die Verbindungselemente 23.1, 23.2 in eine konvexe Aussenkontur des Verschlusses integriert mit einem entsprechend spitzen Winkel $\omega$ (<180°) zwischen den Ebenen 31 und 32. Bei anderen Ausführungsbeispielen mit konkaver Aussenkontur wird ein stumpfer Winkel (>180°) zwischen den beiden Ebenen 31, 32 eingeschlossen. Bei den Scharnierverbindungen 24.1, 24.2, resp. 25.1, 25.2 handelt es sich bevorzugt um Filmscharniere, wie sie aus dem Stand der Technik bestens bekannt sind. Diegewünschten Biegeberetche können aber auch anders ausgebildet sein. Der Verschluss 20 wird in der hier gezeigten, geschlossenen Position vorzugsweise mittels Spritzgiessen hergestellt. Die Verschlussteile 21, 22 und 23.1, 23.2, sowie die Scharnierverbindungen 24.1, 24.2, 25.1, 25.2 sind hierdurch umlaufende Spalten 33 bis 38 funktionell von einander getrennt, so dass der bewegliche Verschlussoberteil 22 gegenüber dem Verschlussunterteil 21 mindestens zwei räumlich definierte und stabile Positionen einnehmen kann. Zwischen diesen stabilen Positionen bestehen instabile Zustände (Totpunkte), so dass der Verschlussoberteil 22 von selbst der nächstbenachbarten stabilen Position zustrebt und damit einen Schnappeffekt aufweist. In gewissen stabilen Positionen, insbesondere in der hier gezeigten geschlossenen Stellung des Verschlusses 20 befinden sich die Verschlussteile 21, 22,23.1,23.2,24.1,24.2, 25.1, 25.2 in weitgehen spannungsfreien Zuständen (geometrischen Deformationen). Neben diesen spannungsfreien, stabilen Positionen sind auch nichtspannungsfreie stabile Positionen denkbar. In diesen befinden sich die Elemente 23.1 und 23.2, sowie die Scharnierverbindungen 24.1, 24.2, 25.1, 25.2 typischerweise unter einer Torsions- und den dadurch hervorgerufenen sekundären Beanspruchungen. Die Elemente 23.1 und 23.2 sind entlang einer kürzeren freien Kante 45.1, resp. 45.2 vorzugsweise so ausgebildet, dass sie unter den auftretenden Drucklasten nicht Ausknicken. Die längeren freien Kanten 46.1, resp. 46.2 sind bevorzugter Weise so ausgestaltet, dass sie sich unter den auftretenden Zugspannungen elastisch und reversibel verlängern. Dies kann beispielsweise durch eine räumliche Krümmung oder spezifische Materialwahl erreicht werden. Die Verschlussteile 21 und 22 weisen mit Vorteil eine gewisse Elastizität auf, so dass sie sich unter den auftretenden Belastungen bei Bedarf elastisch und reversibel deformieren. Die Elemente 23.1 und 23.2 sind mit Vorteil so ausgebildet, dass sie sich aufgrund der auftreten den Torsionskräfte kontrolliert deformieren. Über die Torsionssteifigkeit der Elemente 23.1, 23.2 ist die Koordination zwischen den Verschlussteilen 21 und 22 einstellbar. Die gewünschte Schnappkraft kann somit durch die Verschlussteile oder durch die Verbindungselemente einzeln oder in Kombination miteinander erreicht werden. Durch eine geringe Torsionssteifigkeit der Elemente 23.1 und 23.2 ist es möglich Zwischenzustände zu erreichen, in denen die Verschlussteile zueinander stabile, aber nicht spannungsfreie Positionen einnehmen. Verschlüsse mit mehreren Offenpositionen sind so realisierbar.

Die Verschlussteile sind durch die Spalten 33 bis 38 von einander getrennt, so dass der Verschluss 20 geöffnet

EP 1 147 054 B1

und geschlossen werden kann. Die Spalten 33 bis 38 sind so ausgebildet, dass sie werkzeugtechnisch optimal zugänglich und entformbar sind. Im Spalt 33 der hier gezeigten Ausführungsform befinden sich Elemente 39. Diese verbinden zusätzlich die Verschlussteile 21 und 22. Die Elemente 39 sind so ausgestaltet, dass sie bei Bedarf als Sollbruchstellen dienen, die beim ersten Öffnen des Verschlusses zerstört werden. Die Elemente 39 können auch als umlaufende, membranähnliche Sollbruchstelle ausgebildet sein, welche einen oder mehrere gewünschte Sektoren umschliessen. Ein Verbraucher kann dadurch erkennen, ob der Verschluss vor dem Kauf schon einmal geöffnet wurde (Qualitäts-Originaiitätssiegel). Die Elemente 39 dienen zudem als Sicherung gegen ungewolltes Öffnen beim Transport, da beim erstmaligen Öffnen ein erhöhter Kraftaufwand überwunden werden muss. Neben den oben erwähnten Punkten dienen die Elemente 39 zudem als Fliesshilfen beim Herstellen des Verschlusses 20, um eine bessere Formfüllung zu erreichen. Anstelle von Elementen 39 sind auch andere äquivalente Mittel (nicht näher dargestellt), beispielsweise in Form von Abreisslippen, denkbar, die vor dem ersten Öffnen beispielsweise durch Abreissen entfernt werden müssen. Integrationen von weiteren Funktionen werden nicht behindert. Der Vertauf der Spalten 33 bis 38 istweitgehend frei wählbar, solange keine Behinderung der Funktionsweise des Verschlusses und der Herstellbarkeit stattfindet. Die Elemente 23.1 und 23.2 werden bevorzugt in die Aussenkontur der Verschlussteile 21 und 22 integriert. Bei der hier offenbarten Erfindung sind dadurch dem Design, im Unterschied zum Stand der Technik, nur wenig Grenzen gesetzt Die Elemente 23.1 und 23. 2 sind hier der Aussenkontur des Verschlusses angepasst und integriert Selbstverständlich können Sie auch eine andere Ausgestaltung aufweisen oder flach ausgebildet sein. Falls erforderlich können sie untereinander eine Verbindung aufweisen. Eine vorteilhafte Verbindung kann beispielsweise in Form einer weiteren (geraden) Scharnierverbindung, bei Kunststoffen in Form eines Filmscharniers, realisiert werden.

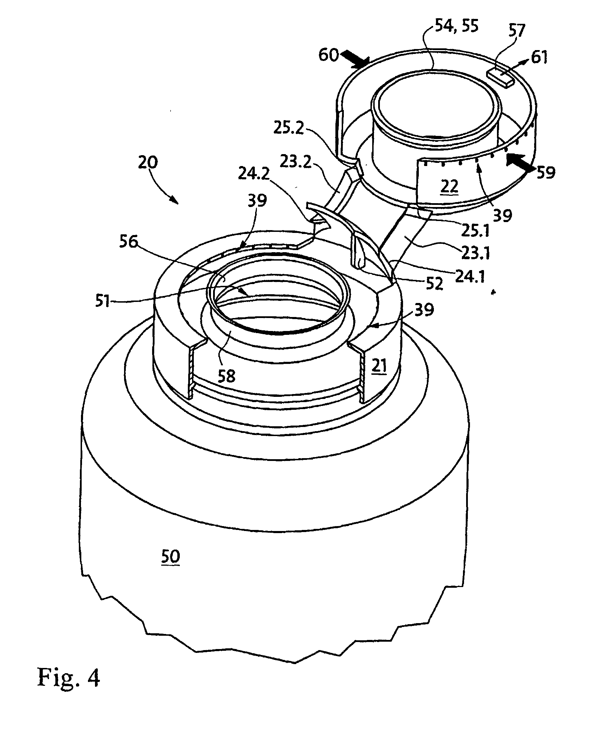

**Figur 4** zeigt den Verschluss 20 gemäss Figur 3 in einer perspektivischen Schnittdarstellung in geöffneter Position. Der Verschluss 20 ist hier durch Aufprellen auf einer Flasche 50 befestigt. Der Verschlussoberteil 22 befindet sich hier in einer stabilen Offenposition um 180° nach hinten geschwenkt, so dass eine Ausgussöffnung 51 zum Ausgiessen des in der Flasche 50 enthaltenen Füllgutes frei ist. Der Verschlussoberteil 22 befindet sich in der hier gezeigten Ausführungsform schräg oberhalb vom Verschlussunterteil 21, so dass er ein Ausgiessen nicht behindert und den Ausguss 51 optisch nicht verdeckt. Aufgrund der erfindungsgemäss vermiedenen Hauptscharnierverbindung und der Länge der Verbindungselemente 23.1, 23.2, ist es möglich den Verschlussoberteil 22 bei einem geschlossen gespritzten Verschluss 20 in diese Position zu bringen. Bei den aus dem Stand der Technik bekannten Verschlüssen behindert ein Verschlussoberteil in der Regel ein Ausgiessen. Die Elemente 39 wurden hier, beim Öffnen bewusst des Verschlusses 20, zerstört. Reste der Elemente 39 befinden sich daher sowohl am Verschlussunterteil 21 als auch am Verschlussoberteil 22. Einem Benutzer wird dadurch sicher angezeigt, dass der Verschluss 20 mindestens einmal geöffnet wurde. Die Verschlussteile 21, 22, 23.1, 23.2, 24.1, 24.2, 25.1, 25.2 sind in der hier gezeigten Offenstellung des Verschlusses 20 vorteilhafterweise weitgehend spannungsfrei. Dies bedeutet, dass die Verschlussteile 21, 22, 23.1, 23.2 (bis auf die Scharnierverbindungen 24.1, 24.2, 25.1, 25.2) keinen Deformationen unterworfen sind. Im Innern des Verschlusses 20, bevorzugt im Bereich der Elemente 23.1 und 23.2, befinden sich an den Verschlussteilen 21, 22, 23.1, 23.2 Mittel 52 zur partiellen Aussteifung der Verschlussteile 21, 22, 23.1, 23.2. Dadurch werden das Schnappverhalten und die Funktionalität des Verschlusses 20 gezielt beeinflusst. Als Mittel 52 zur Aussteifung der Verschlussteile kommen vorzugsweise Rippen, Verdickungen oder andere, äquivalente Mittel zum Einsatz.

Im Innern des Verschlussoberteils 22 ist ein röhrenförmiges Element 53 zu erkennen, das hier einen mittels einem Wulst 54 verdickten Rand 55 aufweist. Das Element 53, resp. der Wulst 54 korrespondiert in der Schliessstellung des Verschlusses 20 mit dem Ausguss 51 der Flasche 50 oder eines Adapterstücks zwischen Flasche und Verschluss, so dass diese dichtend verschlossen wird. Das Element 53, der Wulst 54 und der mit ihnen in Schliessstellung des Verschlusses 20 in Wirkverbindung stehende Ausguss 51 sind vorteilhafterweise so ausgestaltet, dass die Dichtwirkung proportional dem Innendruck der Flasche 50 angepasst wird. Dies kann beispielsweise durch die Geometrie des röhrenförmigen Elements 53 erreicht werden, indem sich der Rand 55, resp. der Wulst 54 proportional zum Innendruck mehr dehnt als der Durchmesser des Ausgusses 51. Dadurch wird der Rand 55 mit steigendem Innendruck mehr gegen eine Innenwand 56 des Ausgusses 51 gepresst, wodurch sich die Dichtwirkung verstärkt. Auf der Innenseite des Verschlussoberteils 22 befindet sich Wirkelement 57. Dieses Wirkelement 57 steht in der Schliessstellung des Verschlusses 20 in Wirkverbindung mit einem Gegenelement, hier einem Aussenrand 58 der Flasche 50, indem es diesen untergreift und so den Verschluss 20 gegen ungewolltes Öffnen, beispielsweise beim Transportieren oder bei hohen Innendrücken, sichert. Dieser Verriegelungsmechanismus ist hier durch seitliches Drücken auf den Verschlussoberteil 22 in Richtung von Pfeilen 59 und 60 temporär lösbar. Infolge des seitlichen Drückens deformiert sich der Verschlussoberteil so, dass der Riegel 57 in Richtung eines Pfeiles 61 bewegt und die Wirkverbindung mit dem Aussenrand 58 temporär gelöst wird. Der Verschluss 20 kann so geöffnetwerden. Der hier gezeigte Verriegelungsmechanismus eignet sich auch besonders gut zur Kombination mit einem Qualitäts-oder Originalitätssiegel in Form einerAbreisslippe (nicht näher dargestellt). Selbstverständlich ist es auch denkbar mehr als einen Riegel 57 zu verwenden oder diesen anders zu platzieren. Die Wirkbereiche der Druckkräfte müssen entsprechend angepasst werden. Somit ist der erfindungsgemässe Verschluss selbst bei hohen Innendrücken einsetzbar.

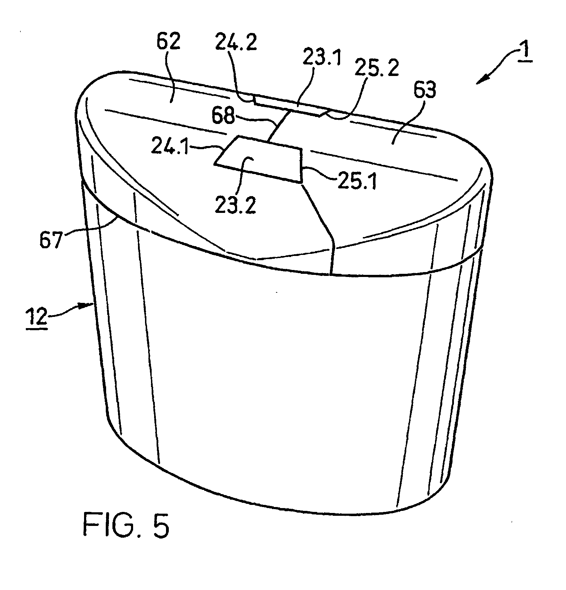

**Figur 5** zeigt ein anderes Ausführungsbeispiel eines Verschlusses 1, der auf einen Behälter 12 aufgesetzt,

5

vorzugsweise aufgeprellt ist Der Verschluss enthält einen ersten, festen Verschlussteil 62 und einen zweiten, beweglichen Verschlussteil 63. Der Behälter 12 kann im Bereich seines oberen Endes 67 eine vollständige Öffnung aufweisen, welche im wesentlichen dessen gesamten Querschnitt beschlägt oder aber im Bereich des beweglichen Verschlussteils 63 eine kleinere Öffnung, welche frei gegeben wird, sobald sich der bewegliche Verschlussteil 63 öffnet. Im Bereich des Übergangs 68 der beiden Verschlussteile sind zwei Verbindungselemente 23.1, 23.2 angeordnet, welche die Scharnierverbindung zwischen den beiden Verschlussteilen bilden. Im Unterschied zu den vorstehend beschriebenen Verschlüssen sind die Verbindungselemente nicht seitlich des Verschlusses in einer geneigten Fläche angeordnet, sondern auf der Oberseite des Verschlusses (bezogen auf die Verschlussachse). Die Geometrie der beiden Verbindungselemente 23.1, 23.2 ist bevorzugt so ausgelegt, dass der bewegliche Verschlussteil entweder in eine Schnappbewegung um ca. 90° oder um 180° ausführt, wobei die oben in Zusammenhang mit Figur 2 erwähnte Formel eingesetzt wird, um den gewünschten Öffnungswinkel $\alpha$ zu erreichen. Selbstverständlich können durch entsprechende Veränderung der Scharnierverbindungen 24.1, 25.1, resp. 24.2, 25.2 auch andere Zwischenwinkel bewirkt werden. Die erfindungsgemässe Vermeidung eines Hauptscharniers in Kombination mit der gegenseitigen Anordnung der Verschlussteile ermöglicht einen solchen Verschluss mit grossem Öffnungswinkel $\alpha$.

Die äussere Geometrie des Verschlusses kann wie hier gezeigt eine konvexe Form aufweisen. Entsprechend sind aber auch Verschlüsse realisierbar, bei denen die Verbindungselemente in einer Senkung angeordnet sind, bzw. bei denen die äussere Geometrie im wesentlichen konkav ist. Die Anordnung der Scharnierverbindungen im oberen Bereich des Verschlusses ermöglicht besonders günstige Scharniere sowie Sollbruchstellen zwecks Erreichung eines Originalitätssiegels, indem bspw. der Übergang 68 zwischen den beiden Verschlussteilen 62, 63 nicht durchgehend getrennt ist, sondern Sollbruchstellen-Verbindungen bzw. Verbindungsbereiche enthält, welche beim ersten Öffnen durchtrenntwerden. Entsprechend der Erfindung ist es möglich, die Verbindungselemente 23.1, 23.2 vollständig in die Verschlusskontur zu integrieren, so dass eine grosse Vielzahl von Verschlussdesigns möglich sind. Bspw. kann der bewegliche Verschlussteil kleiner gestaltet sein und durch den festen Verschlussteil umrandet sein, so dass durch Öffnen des beweglichen Verschlussteils eine Öffnung im Verschluss selber erzielt wird und der Behälter anders als beim in dieser Figur gezeigten Beispiel entlang seiner oberen Kante (Aufprellwulst, Verschweissung, etc.) nichtfrei gegeben wird. Eine solche Ausgestaltung des beweglichen Verschlussteils ist dann besonders vorteilhaft, wenn eine Originalitätsversiegelung vorgesehen werden muss, bei der Deckelteil und Behälter an keiner Stelle voneinander lösbar sein dürfen.

Es ist bei besonderen Ausführungsformen möglich, mehr als zwei Verbindungselemente 23.1, 23.2 vorzusehen, wobei die Anordnung der weiteren Verbindungselemente die Verschlusskinematik unterstützen soll. Die Verbindungselemente können entsprechend Lösungen gemäss EP 0 746 512 zusätzliche Scharnierbewegungen erlauben.

## Patentansprüche

1.    Geschlossen gespritzter Verschluss (20) mit einem ersten Verschlusstell (21), einem zweiten Verschlussteil (22), weiche Verschlusstelle (21, 22) untereinander keine Hauptscharnierverbindung aufweisen, und zwei Verbindungselementen (23.1, 23.2), die über jezwel diese an nichtaneinander grenzenden Seiten berandende Scharnierverbindungen (24.1, 24.2, 25.1, 25.2), die zueinander in einem Winkel ($\phi$) stehen und paarweise Ebenen (31, 32) aufspannen, die einen Winkel ($\omega$) untereinander einschliessen, mit dem ersten verschlusstell (21) und dem zweiten Verschlusstell (22)verbunden sind,
**dadurch gekennzeichnet,**
**dass** die durch die Scharnierverbindungen (24.1,25.1,24.2,25.2) aufgespannten Ebenen (31, 32) in der Schliessstellung des Verschlusses (20) gegenüber der Verschlussachse (A) geneigt sind, derart dass die Verbindungselemente (23.1,23.2) und die Scharnierverbindungen (24.1, 25.1, 24.2, 25.2) vorn Verschlussinneren (27) und vom Verschlussäusseren (28) her werkzeugtechnisch zugänglich und entformbar sind.

2.    Geschlossen gespritzter Verschluss (20) gemass Patentanspruch 1, **dadurch gekennzeichnet, dass** die Verschlussteile (21, 22, 23.1, 23.2) in der Schliessstellung des Verschlusses durch mindestens einen Spalt (33 bis 38, 68) funktionell voneinander getrennt sind.

3.    Geschlossen gespritzter Verschluss (20) gemäss einem der vorangehenden Patentansprüche, **dadurch gekennzeichnet, dass** die Verschlussteile (21, 22, 23.1, 23.2) in der Schliessstellung des Verschlusses (20) durch mindestens ein Element (39) verbunden sind, das beim ersten Öffnen des Verschlusses (20) zerstört oder entfernt wird.

4.    Geschlossen gespritzter Verschluss (20) gemäss Patentanspruch 3, **dadurch gekennzeichnet, dass** das mindestens eine Element (39) ein Steg (39) oder eine Abreisslippe ist.

**5.** Geschlossen gespritzter Verschluss (20) gemäss einem der vorangehenden Patentansprüche, **dadurch gekennzeichnet, dass** der zweite Verschlussteil (22) gegenüber dem ersten Verschlussteil (21) mindestens zwei stabile Positionen aufweist.

**6.** Geschlossen gespritzter Verschluss (20) gemäss einem der vorangehenden Patentansprüche, **dadurch gekennzeichnet, dass** der erste (21) und der zweite Verschlussteil (22) sowie die Verbindungselemente (23.1,23.2) in der Offenstellung keine geometrischen Deformationen gegenüber dem gespritzten Zustand aufweisen.

**7.** Geschlossen gespritzter Verschluss (20) gemäss einem der vorangehenden Patentansprüche, **dadurch gekennzeichnet, dass** der Öffnungswinkel ($\alpha$) zwischen dem ersten Verschlussteil (21) und dem zweiten Verschlusstell (22) in einer Offenstellung des Verschlusses (20) 150° bis 180° beträgt.

**8.** Geschlossen gespritzter Verschluss gemäss einem der vorangehenden Patentansprüche, **dadurch gekennzeichnet, dass** je zwei ein Verbindungselement (23.1, 23.2) berandende Scharnierverbindungen (24.1, 25.1, 24.2, 25.2) einen ersten Winkel ($\omega$) und die beiden Ebenen (31, 32) einen zweiten Winkel ($\Phi$) einschliessen und dass der Zusammenhang zwischen dem Öffnungswinkel ($\alpha$) des Verschlusses (20) und dem ersten Winkel ($\omega$) und dem zweiten Winkel ($\Phi$) durch folgende Formel gegeben ist

$$\Phi = 2 \cdot \arctan\left[\frac{\sin(\alpha/2)}{1-\cos(\alpha/2)} \; \sin(\omega/2)\right].$$

**9.** Geschlossen gespritzter Verschluss gemäss einem der vorangehenden Patentansprüche, **dadurch gekennzeichnet, dass** die Verbindungselemente (23.1, 23.2) in einem konkaven oder in einem konvexen Bereich des Verschlusses (20) integriert sind.

**10.** Geschlossen gespritzter Verschluss gemäss einem der vorangehenden Patentansprüche, **dadurch gekennzeichnet, dass** der erste Verschlussteil (62) an den zweiten Verschlussteil (63) angrenztund beide Verschlussteile (62, 63) mit einem Behälter (12) wirkverbunden sind, wobei mindestens ein Verschlussteil (63) mit letzterem in lösbarer Wirkverbindung steht.

**Claims**

**1.** Closed moulded closure (20) comprising a first closure part (21), a second closure part (22), which closure parts (21, 22) have no main hinge connection between one another, and two connecting elements (23.1, 23.2) which are each connected to the first closure part (21) and to the second closure part (22) via two hinge connections (24.1, 24.2, 25.1, 25.2) which border said connecting elements (23.1, 23.2) on sides not adjacent to one another, said hinge connections (24.1, 24.2, 25.1, 25.2) are at an angle ($\phi$) to one another and in pairs define planes (31, 32) which make an angle ($\omega$) with one another,
**characterized in that**,
in the closed position of the closure (20), the planes (31, 32) defined by the hinge connections (24.1, 25.1, 24.2, 25.2) are inclined relative to the closure axis (A) in such a way that the connecting elements (23.1, 23.2) and the hinge connections (24.1, 25.1, 24.2, 25.2) are accessible in the mould from the closure interior (27) and from the closure exterior (28) and can be demolded.

**2.** Closed moulded closure (20) according to claim 1, **characterized in that** in the closed position of the closure, the closure parts (21, 22, 23.1, 23.2) are functionally separated from one another by at least one gap (33 to 38, 68).

**3.** Closed moulded closure (20) according to any of the preceding claims, **characterized in that,** in the closed position of the closure (20), the closure parts (21, 22, 23.1, 23.2) are connected by at least one element (39) which is destroyed or removed when the closure (20) is first opened.

**4.** Closed moulded closure (20) according to claim 3, **characterized in that** the at least one element (39) is a web (39) or a tear-off lip.

5. Closed moulded closure (20) according to any of the preceding claims, **characterized in that** the second closure part (22) has at least two stable positions relative to the first closure part (21).

6. Closed moulded closure (20) according to any of the preceding claims, **characterized in that,** in the open position, the first (21) and the second closure part (22) and the connecting elements (23.1, 23.2) have no geometrical deformation compared with the injection-moulded state.

7. Closed moulded closure (20) according to any of the preceding claims, **characterized in that,** in an open position of the closure (20), the opening angle ($\alpha$) between the first closure part (21) and the second closure part (22) is 150° to 180°.

8. Closed moulded closure (20) according to any of the preceding claims, **characterized in that** two hinge connections (24.1, 25.1, 24.2, 25.2) bordering a connecting element (23.1, 23.2) make a first angle ($\omega$) and the two planes (31, 32) make a second angle ($\phi$) and that the relationship between the opening angle ($\alpha$) of the closure (20) and the first angle ($\omega$) and the second angle ($\phi$) is given by the following formula;

$$\phi = 2 \cdot \arctan\left[\frac{\sin(\alpha/2)}{1-\cos(\alpha/2)}\sin(\omega/2)\right].$$

9. Closed moulded closure (20) according to any of the preceding claims, **characterized in that** the connecting elements (23.1, 23.2) are integrated in a concave or in a convex region of the closure (20).

10. Closed moulded closure (20) according to any of the preceding claims, **characterized in that** the first closure part (62) is adjacent to the second closure part (63) and both closure parts (62, 63) are operatively connected to a container (12), at least one closure part (63) being operatively connected to the latter in a detachable manner.

**Revendications**

1. Fermeture injectée fermée (20) avec une première partie de fermeture (21), une seconde partie de fermeture (22), ces parties de fermeture (21, 22) ne présentant entre elles aucune liaison principale par charnière, et deux éléments de liaison (23.1, 23.2) qui sont chacun reliés avec la première partie de fermeture (21) et la seconde partie de fermeture (22) par deux liaisons à charnière (24.1, 24.2, 25.1, 25.2) bordant ces deux côtés qui ne sont pas contigus, qui se trouvent entre eux à un angle ($\Phi$) et qui enserrent par paires des plans (31, 32) qui contiennent entre eux un angle ($\omega$),
   **caractérisée par le fait
   que** par les plans (31, 32) enserrés par les liaisons à charnière (24.1, 24.2, 25.1, 25.2) sont inclinés dans la position de fermeture de la fermeture (20) par rapport à l'axe de fermeture (A) de telle sorte que les éléments de liaison (23.1, 23.2) et les liaisons à charnière (24.1, 24.2, 251, 25.2) soient accessibles et extractibles au point de vue de la technique de l'outillage depuis l'intérieur de la fermeture (27) et depuis l'extérieur de la fermeture (27).

2. Fermeture injectée fermée (20) selon la revendication 1, **caractérisée par le fait que** les parties de fermeture (21, 22, 23.1, 23.2) sont séparées fonctionnellement dans la position de fermeture de la fermeture par un écartement au moins (33 à 38, 68).

3. Fermeture injectée fermée (20) selon l'une des revendications précédentes, **caractérisée par le fait que** les parties de fermeture (21, 22, 23.1, 23.2) sont reliées dans la position de fermeture de la fermeture par au moins un élément (39) qui est détruit ou enlevé lors de la première ouverture de la fermeture.

4. Fermeture injectée fermée (20) selon la revendication 3, **caractérisée par le fait que** au moins un élément (39) soit une nervure (39) ou une lèvre d'arrachement.

5. Fermeture injectée fermée (20) selon l'une des revendications précédentes, **caractérisée par le fait que** la seconde partie de fermeture (22) présente au moins deux positions stables par rapport à la première partie de fermeture (21).

6. Fermeture injectée fermée (20) selon l'une des revendications précédentes, **caractérisée par le fait que** la première (21) et la seconde partie de fermeture (22) ainsi que les éléments de liaison (23.1, 23.2) ne présentent dans la position de ouverture aucune déformation géométrique par rapport à l'état injecté.

7. Fermeture injectée fermée (20) selon l'une des revendications précédentes, **caractérisée par le fait que** l'angle d'ouverture ($\alpha$) entre la première partie de fermeture (21) et la seconde partie de fermeture (22) soit, dans une position ouverte de la fermeture (20), compris entre 150° et 180°.

8. Fermeture injectée fermée (20) selon l'une des revendications précédentes, **caractérisée par le fait que** chacune des deux liaisons à charnière (24.1, 24.2, 25.1, 25.2) bordant un élément de liaison (23.1, 23.2) enferment un premier angle ($\omega$) et les deux plans (31, 32) un deuxième angle ($\Phi$) et que la relation entre l'angle d'ouverture ($\alpha$) de la fermeture (20) et le premier angle ($\omega$) et le deuxième angle ($\Phi$) soit donnée par la formule suivante:

$$\phi = 2 \cdot \arctan\left[\frac{\sin(\alpha/2)}{1-\cos(\alpha/2)}\sin(\omega/2)\right]$$

9. Fermeture injectée fermée (20) selon l'une des revendications précédentes, **caractérisée par le fait que** les éléments de liaison (23.1, 23.2) sont intégrés dans une zone concave ou convexe de la fermeture (20).

10. Fermeture injectée fermée (20) selon l'une des revendications précédentes, **caractérisée par le fait que** la première partie de fermeture (62) soit en limite de la seconde partie de fermeture (63) et que les deux parties de fermeture (62, 63) soient reliées activement avec un réservoir (12) où au moins une partie de fermeture (63) se trouve en liaison active détachable avec la dernière.

Fig. 1

Fig. 2

Fig. 3

Fig. 4

FIG. 5